(19) Europäisches Patentamt
European Patent Office
Office européen des brevets

(11) Publication number: 0 489 921 B1

(12) # EUROPEAN PATENT SPECIFICATION

(45) Date of publication of patent specification: **13.09.95**

(51) Int. Cl.[6]: **C08L 9/00**, C08L 11/00, C08K 5/17, C08K 5/34, C08K 5/41, C08K 5/47

(21) Application number: **91910859.7**

(22) Date of filing: **19.06.91**

(86) International application number: **PCT/JP91/00818**

(87) International publication number: **WO 92/00350 (09.01.92 92/02)**

(54) **REDUCED HEAT-BUILDUP RUBBER COMPOSITION.**

(30) Priority: **29.06.90 JP 170321/90**

(43) Date of publication of application: **17.06.92 Bulletin 92/25**

(45) Publication of the grant of the patent: **13.09.95 Bulletin 95/37**

(84) Designated Contracting States: **DE ES FR GB IT LU**

(56) References cited:
**JP-A- 6 160 737**
**JP-A-58 210 943**

**PATENT ABSTRACTS OF JAPAN vol. 14, no. 310 (C-736)(4253) 4 July 1990**

(73) Proprietor: **Bridgestone Corporation**
**1-1, Kyobashi 1-Chome**
**Chuo-Ku**
**Tokyo 104 (JP)**

(72) Inventor: **TAKIMURA, Mamoru**
**5-5-709, Ogawa Higashicho 3-chome**
**Kodaira-shi,**
**Tokyo 187 (JP)**
Inventor: **HIRATA, Yasushi**
**3144-22, Irumagawa**
**Sayama-shi,**
**Saitama 350-13 (JP)**
Inventor: **HAMADA, Tatsurou**
**4-9-212, Ogawa Higashicho 3-chome**
**Kodaira-shi,**
**Tokyo 187 (JP)**
Inventor: **HOUJYOU, Masahiro**
**5-5, Ogawa Higashicho 3-chome**
**Kodaira-shi,**
**Tokyo 187 (JP)**
Inventor: **HATAKEYAMA, Kazuya**
**5-5, Ogawa Higashicho 3-chome**
**Kodaira-shi,**
**Tokyo 187 (JP)**

(74) Representative: **Whalley, Kevin**
**MARKS & CLERK,**
**57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a low heat-generation rubber composition, and more particularly to a rubber composition having a heat-generation lower than that of the conventional low heat-generation rubber composition.

In order to satisfy social demands of resource-saving and energy-saving, the developmen of low fuel-consumption tires has been conducted for several years in the rubber industry, particularly the tire industry. In the development of such low fuel-consumption tires, it is inevitable to use low heat-generation rubber compositions. As a technique of improving low heat-generation by polymer, particularly conjugated diene based polymer, there are some techniques disclosed, for example in Japanese Patent Application Publication No. 44-4966, U.S. Patent No. 3956232, Japanese Patent laid open No. 57-205414, and Japanese Patent laid open No. 61-141741. They are concerned with an improving technique through the reaction between the polymer and tin compound or isocyanate compound, whereby it is attempted to improve fuel consumption and reinforcing properties.

On the other hand, techniques of improving low heat-generation rubber compositions by compounding chemicals are disclosed in Japanese Patent laid open No. 1-207337.

Recently, it is more demanded to lower the fuel consumption of a vehicle for preventing global warming. However, it has been confirmed that the improving techniques with the above polymer or compounded chemical composition itself are not sufficient for this purpose.

Therefore, it is naturally considered to use a combination of the low heat-generation polymer and compounded chemical compositions for further improving the low heat-generation. The present inventors have confirmed that, even when low heat-generation improver is compounded with the low heat-generation polymer, remarkable effects are not obtained as compared with the effect obtained by adding the low heat-generation improver to a conventional polymer.

The present invention aims to provide a combination of low heat-generation polymer and low heat-generation improver capable of developing low heat-generation effect by synergistic action of such a combination.

The inventors have made various studies in order to solve the above problem and found that an unexpected low heat-generation improving effect is developed by combining particular tin-modified diene series rubber with a low heat-generation improver inclusive of 2,5-dimercapto-1,3,4-thiadiazole, and as a result the invention has been accomplished.

The present invention provides a low heat-generation rubber composition comprising 20-100 parts by weight of a reinforcing filler, 0.1-5 parts by weight of 2,5-dimercapto-1,3,4-thiadiazole and 0.2-10 parts by weight of at least one compound selected from compounds of the following formulae (I) - (VIII):

(I) 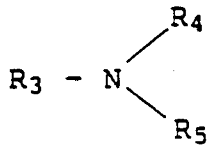

(II) 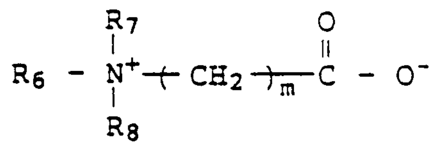

(III) 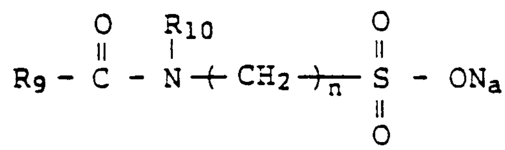

(IV) 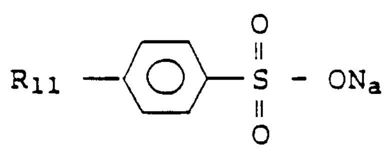

(V) 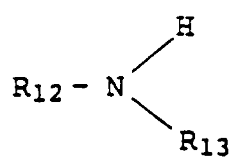

(VI) 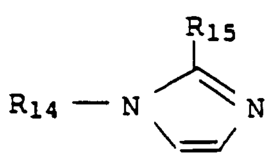

(VII) 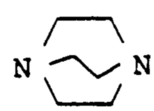

(VIII) 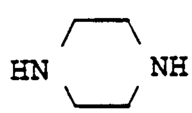

(wherein $R_3$, $R_6$, $R_9$, $R_{11}$ in (I)-(VIII) are alkyl group having a carbon number of 8-18 or aryl group, $R_4$, $R_5$, $R_7$, $R_8$, $R_{10}$ are alkyl group having a carbon number of 1-2, $R_{12}$ is aryl group or cyclohexyl group, $R_{13}$ is alkyl group having a carbon number of 1-6, cyclohexyl group or hydrogen atom, $R_{14}$, $R_{15}$ are alkyl groups having a carbon number of 1-18, benzyl group or hydrogen atom, and each of m and n is an integer of 1-3)

based on 100 parts by weight of a polymer obtained by reacting a conjugated diene series polymer containing an alkali metal in its polymer terminal, which is obtained by polymerizing or copolymerizing a conjugated diene compound or a conjugated diene compound and an aromatic vinyl compound in a hydrocarbon solvent in the presence of an organic alkali metal as a polymerization initiator, with a tin compound represented by the following general formula:

$Sn(R_1)_pX_{4-p}$

or

$$(R_1)_pSn(\underset{\underset{O}{\|}}{OC}-R_2)_{4-p}$$

(wherein $R_1$ and $R_2$ are substituents selected from the group consisting of alkyl group, alkenyl group, cycloalkyl group and aryl group and are the same or different, X is a halogen atom and p is an integer of 0-3) (hereinafter referred to as a tin compound-modified polymer) alone or a rubber blend of not less than 30 parts by weight of this polymer and another diene series polymer.

The tin compound-modified polymer used in the rubber composition according to the invention is produced, for example, by methods as mentioned later.

In general, the production is carried out in an inert organic solvent. In this case, pentane, hexane, cyclohexane, heptane, benzene, xylene, toluene, tetrahydrofuran, and diethyl ether are used as the inert organic solvent.

At first, the homopolymerization of the conjugated diene compound such as butadiene, or the copolymerization of the conjugated diene compound and the aromatic vinyl compound such as butadiene and styrene is conducted. As the polymerization initiator is used an organic alkali metal. As the organic alkali metal catalyst, mention may be made of alkyl lithiums such as n-butyllithium, sec-butyllithium, t-butyllithium, 1,4-dilithium butane, and a reaction product of butyllithium and divinylbenzene; alkylene dilithiums, stilbene dilithium, diisopropenylbenzene dilithium, sodium naphthalene, and lithium naphthalene. In the copolymerization, a Lewis base may be used as a randomizing agent and an adjusting agent for the microstructure of the butadiene unit in the polymer, if necessary. As this base, mention may be made of ethers and tertiary amines such as dimethoxybenzene, tetrahydrofuran, dimethoxy ethane, diethylene glycol dibutyl ether, diethylene glycol dimethyl ether, triethylamine, pyridine, N-methylmorpholine, N,N,N',N'-tetramethylethylene diamine; and 1,2-dipyperidino ethane.

In the polymerization for the production of living polymers, the above inert organic solvent, monomer such as 1,3-butadiene or 1,3-butadiene and styrene and an organic alkali metal catalyst and, if necessary, a Lewis base are charged into a reaction vessel purged with nitrogen as a polymerization system simultaneously or discontinuously or continuously to conduct polymerization.

The polymerization temperature is usually -120 to +150°C, preferably -80 to +120°C, and the polymerization time is usually 5 minutes to 24 hours, preferably 10 minutes to 10 hours.

The reaction may be carried out at a constant temperature within the above polymerization temperature range, or the polymerization may be made by raising the temperature or under adiabatic conditions. Furthermore, the polymerization reaction may be a batch system or a continuous system.

Moreover, the concentration of the monomer in the solvent is usually 5-50% by weight, preferably 10-35% by weight.

In the production of the living polymer, in order to deactivate the organic alkali metal catalyst and the living polymer, it is required to take care to prevent the incorporation of deactivating compound such as halogen compound, oxygen, water, or carbon dioxide gas into the polymerization system as far as possible.

The tin compound-modified polymer used in the invention is a tin compound-modified polymer obtained by reacting an active terminal of the living polymer contained in the above polymer system with the following particular tin compound.

As a particular example of the tin compound, use may preferably be made of tetrachlorotin, tetrabromotin, methyl trichlorotin, butyl trichlorotin, octyl trichlorotin, phenyl trichlorotin, phenyl tribromotin, dimethyl dichlorotin, dimethyl dibromotin, diethyl dichlorotin, dibutyl dichlorotin, diphenyl dichlorotin, diallyl dichlorotin, tributenyl monochlorotin, methyl tin trisstearate, ethyl tin trisstearate, butyl tin trisoctanoate, butyl tin trisstearate, octyl tin trisstearate, octyl tin trisstearate, butyl tin trislaurate, dibutyl tin bisoctanoate,

dibutyl tin bisstearate, dibutyl tin bislaurate, dimethyl tin bisstearate, diethyl tin bislaurate, dioctyl tin bisstearate, trimethyl tin laurate, trimethyl tin stearate, tributyl tin octanoate, tributyl tin stearate, tributyl tin laurate, trioctyl tin stearate, phenyl tin trisstearate, phenyl tin trisoctanoate, phenyl tin trislaurate, diphenyl tin bisstearate, diphenyl tin bisoctanoate, diphenyl tin bislaurate, triphenyl tin stearate, triphenyl tin laurate, cyclohexyl tin trisstearate, dicyclohexyl tin bisstearate, tricyclohexyl tin stearate, tributyl tin acetate, dibutyl tin bisacerate, and butyl tin trisacerate.

The tin compound-modified polymer according to the invention is obtained by reacting the active terminal of the living polymer with the above particular tin compound.

The reaction between the active terminal of the living polymer and the tin compound having a functional group is carried out by adding the compound to the solution of polymer system of the living polymer, or by adding the solution of the living polymer to an organic solution containing the tin compound.

The reaction temperature is -120 to +150 °C, preferably -80 to +120 °C, and the reaction time is 1 minute to 5 hours, preferably 5 minutes to 2 hours.

After the completion of the reaction, steam is blown into the polymer solution to remove the solvent, or a poor solvent such as methanol is added to solidify the tin compound-modified polymer and then drying is carried out on a hot roll or under reduced pressure, whereby the tin compound-modified polymer can be obtained.

Alternatively, the tin compound-modified polymer can be obtained by directly removing the solvent from the polymer solution under reduced pressure.

The compound of the general formula (I) used in the rubber composition according to the invention includes dimethyldodecylamine, hexadecyldimethylamine and octadecyldimethylamine. The compound of the general formula (II) includes dimethyldodecylbetaine, dimethylhexadecylbetaine and dimethyloctadecylbetaine. The compound of the general formula (III) includes sodium acylmethyl taurate. The compound of the general formula (IV) includes sodium dodecylbenzene sulfonate, sodium hexadecylbenzene sulfonate and sodium octadecylbenzene sulfonate. The compound of the general formula (V) includes N-methylaniline, aniline, p-methoxyaniline, N-ethylaniline, N,N'-diphenyl, p-phenylene diamine, N-(1,3-dimethylbutyl)-N'-phenyl-p-phenylene diamine, N-phenyl-N'-isopropyl-p-phenylene diamine and dicyclohexylamine. The compound of the general formula (VI) includes imidazole, 2-methylimidazole, 1-benzyl-2-methylimidazole, 1-undecyl-2-stearylimidazole and 1-cyanoethyl-2-methylimidazole. Furthermore, the compound represented by the formula (VII) is 1,4-diazabicyclo [2,2,2] octane, and the compound represented by the formula (VIII) is piperazine.

When the amount of 2,5-dimercapto-1,3,4-thiadiazole compounded is less than 0.1 part by weight or the amount of the compounds represented by the formulae (I)-(VIII) compounded is less than 0.2 part by weight, the synergistic effect of improving heat generation of the rubber composition cannot be expected, while when the amount of 2,5-dimercapto-1,3,4-thiadiazole exceeds 5 parts by weight or the amount of the compound of the formulae (I)-(VIII) exceeds 10 parts by weight, the effect of improving heat generation of the rubber composition is not recognized and also the mechanical properties of the rubber composition are undesirably lower.

Preferably, 2,5-dimercapto-1,3,4-thiadiazole is compounded in an amount of 0.2-1.5 parts by weight, and at least one compound among the compounds represented by the formulae (I)-(VIII) is compounded in an amount of 0.4-4 parts by weight.

In the mixing of these compounds with the above polymer, they may be mixed separately, or a salt of 2,5-dimercapto-1,3,4-thiadiazole and at least one compound selected from the formulae (I)-(VIII) is previously synthesized and may be mixed with the polymer.

As the reinforcing filler used in the rubber composition according to the invention, carbon black is preferably used. The compounding amount is 20-100 parts by weight. When the amount is less than 20 parts by weight, the reinforcing property of the rubber composition is poor, while when it exceeds 100 parts by weight, not only the heat generation but also the wear resistance are considerably degraded.

In the rubber composition according to the invention, additives usually used in the rubber industry such as softening agent, antioxidant, vulcanization accelerator, accelerator promoter, and vulcanizing agent may properly be added, if necessary, in addition to the above reinforcing filler and the heat generation improver.

The invention will be described in detail with reference to the following Synthesis Examples, Examples of the invention, and Comparative examples.

Synthesis Example 1 (Synthesis of polymers A-C)

Into a reaction vessel of 5 ℓ capacity were charged 2500 g of cyclohexane, 375 g of 1,3-butadiene, 125 g of styrene, 17.5 g of tetrahydrofuran and 5.0 mmol of n-butyllithium, and then polymerization was started

at 15°C and conducted for 35 minutes. The temperature at the completion of polymerization was 95°C. After the completion of the polymerization, a given amount of a tin compound shown in the following Table 1 was added to conduct reaction for 15 minutes. Then, the thus obtained polymer solution was added with 2.5 g of 2,6-di-t-butyl-p-cresol and subjected to steam stripping to solidify the resulting polymer, which was dried on a hot roll at 100°C for 15 minutes. The microstructure of the thus obtained three polymers A-C had a cis/trans/vinyl ratio of 19/31/50.

Table 1

| | Tin compound | Addition amount (mmoℓ) |
|---|---|---|
| Polymer A | Tetrachlorotin | 1.2 |
| Polymer B | Tributylmonochlorotin | 5.0 |
| Polymer C | Butyl tin trisstearate | 5.0 |

Synthesis Example 2

Into a flask of 100 mℓ capacity were charged 1.50 g of 2,5-dimercapto-1.3.4-thiadiazole, 3.10 g of dimethyldodecylamine and 50 mℓ of tetrahydrofuran as a solvent, which were reacted at room temperature for 2 hours. After the completion of the reaction, the solvent was distilled off to obtain a salt of 2,5-dimercapto-1,3,4-thiadiazole•dimethyldodecylamine as a target compound.

Synthesis Example 3

Into a flask of 100 mℓ capacity were charged 1.50 g of 2,5-dimercapto-1,3,4-thiadiazole, 6.10g of dimethyldodecylamine and 50 mℓ of tetrahydrofuran as a solvent, which were reacted at room temperature for 2 hours. After the completion of the reaction, the solvent was distilled off to obtain a salt of 2,5-dimercapto-1,3,4-thiadiazole•2-dimethyldodecylamine as a target compound.

Examples 1-14, Comparative Examples 1-14

Each of various rubber compositions having a compounding ratio shown in Table 2 was kneaded by means of a Banbury mixer and then vulcanized to prepare a vulcanized rubber sample.

The value of tan δ was measured by using a viscoelastic measuring testing machine made by Rheometrics Corporation under conditions of a dynamic strain of 1% and 50°C.

The measured results are shown in Table 2.

Table 2(a)

| | | Comparative Example | | | | | | |
|---|---|---|---|---|---|---|---|---|
| | | 1 | 2 | 3 | 4 | 5 | 6 | 7 |
| Compounding recipe (part by weight) | SBR1500 *1 | 100 | 100 | 100 | - | - | - | - |
| | Tufdene 2000 *2 | - | - | - | 100 | 100 | 100 | - |
| | BR01 *3 | - | - | - | - | - | - | 100 |
| | polymer A of Synthesis Example 1 | - | - | - | - | - | - | - |
| | polymer B of Synthesis Example 1 | - | - | - | - | - | - | - |
| | polymer C of Synthesis Example 1 | - | - | - | - | - | - | - |
| | carbon black ISAF | 50 | 50 | 50 | 50 | 50 | 50 | 50 |
| | stearic acid | 1 | 1 | 1 | 1 | 1 | 1 | 1 |
| | 2,5-dimercapto-1,3,4-thiadiazole | - | 0.5 | 0.5 | - | 0.5 | 0.5 | - |
| | dimethyldodecylamine | - | - | 1 | - | - | 1 | - |
| | salt of Synthesis Example 2 | - | - | - | - | - | - | - |
| | salt of Synthesis Example 3 | - | - | - | - | - | - | - |
| | Anon BL *4 | - | - | - | - | - | - | - |
| | Newrex powder T *5 | - | - | - | - | - | - | - |
| | Noclac 6C *6 | - | - | - | - | - | - | - |
| | imidazole | - | - | - | - | - | - | - |
| | 1,4-diazabicyclo [2,2,2] octane | - | - | - | - | - | - | - |
| | piperadine | - | - | - | - | - | - | - |
| | p-methoxyaniline | - | - | - | - | - | - | - |
| | dicyclohexylamine | - | - | - | - | - | - | - |
| | Diapon T powder *7 | - | - | - | - | - | - | - |
| | zinc white | 3 | 3 | 3 | 3 | 3 | 3 | 3 |
| | vulcanization accelerator DM *8 | 1 | 1 | 1 | 1 | 1 | 1 | 1 |
| | vulcanization accelerator DPG *9 | 0.5 | 0.5 | 0.5 | 0.5 | 0.5 | 0.5 | 0.5 |
| | sulfur | 1.5 | 1.5 | 1.5 | 1.5 | 1.5 | 1.5 | 1.5 |
| tan $\delta$ (50°C) | | 0.158 | 0.124 | 0.133 | 0.144 | 0.111 | 0.119 | 0.124 |

Table 2(b)

| | | Comparative Example | | | | | Example | |
|---|---|---|---|---|---|---|---|---|
| | | 8 | 9 | 10 | 11 | 12 | 1 | 2 |
| Compounding recipe (part by weight) | SBR1500 *1 | - | - | - | - | - | - | - |
| | Tufdene 2000 *2 | - | - | - | - | - | - | - |
| | BR01 *3 | 100 | 100 | - | - | - | - | - |
| | polymer A of Synthesis Example 1 | - | - | 100 | 100 | 100 | 100 | - |
| | polymer B of Synthesis Example 1 | - | - | - | - | - | - | 100 |
| | polymer C of Synthesis Example 1 | - | - | - | - | - | - | - |
| | carbon black ISAF | 50 | 50 | 50 | 50 | 50 | 50 | 50 |
| | stearic acid | 1 | 1 | 1 | 1 | 1 | 1 | 1 |
| | 2,5-dimercapto-1,3,4-thiadiazole | 0.5 | 0.5 | - | 0.5 | - | 0.5 | 0.5 |
| | dimethyldodecylamine | - | 1 | - | - | 1 | 1 | 1 |
| | salt of Synthesis Example 2 | - | - | - | - | - | - | - |
| | salt of Synthesis Example 3 | - | - | - | - | - | - | - |
| | Anon BL *4 | - | - | - | - | - | - | - |
| | Newrex powder T *5 | - | - | - | - | - | - | - |
| | Noclac 6C *6 | - | - | - | - | - | - | - |
| | imidazole | - | - | - | - | - | - | - |
| | 1,4-diazabicyclo [2,2,2] octane | - | - | - | - | - | - | - |
| | piperadine | - | - | - | - | - | - | - |
| | p-methoxyaniline | - | - | - | - | - | - | - |
| | dicyclohexylamine | - | - | - | - | - | - | - |
| | Diapon T powder *7 | - | - | - | - | - | - | - |
| | zinc white | 3 | 3 | 3 | 3 | 3 | 3 | 3 |
| | vulcanization accelerator DM *8 | 1 | 1 | 1 | 1 | 1 | 1 | 1 |
| | vulcanization accelerator DPG *9 | 0.5 | 0.5 | 0.5 | 0.5 | 0.5 | 0.5 | 0.5 |
| | sulfur | 1.5 | 1.5 | 1.5 | 1.5 | 1.5 | 1.5 | 1.5 |
| tan $\delta$ (50°C) | | 0.101 | 0.110 | 0.109 | 0.097 | 0.107 | 0.083 | 0.089 |

Table 2(c)

| | | Example | | | Comparative Example | Example | Comparative Example |
|---|---|---|---|---|---|---|---|
| | | 3 | 4 | 5 | 13 | 6 | 14 |
| Compounding recipe (part by weight) | SBR1500 *1 | - | - | - | - | - | - |
| | Tufdene 2000 *2 | - | - | - | - | - | - |
| | BR01 *3 | - | - | - | - | - | - |
| | polymer A of Synthesis Example 1 | - | 100 | 100 | 100 | 100 | 100 |
| | polymer B of Synthesis Example 1 | - | - | - | - | - | - |
| | polymer C of Synthesis Example 1 | 100 | - | - | - | - | - |
| | carbon black ISAF | 50 | 50 | 50 | 50 | 50 | 50 |
| | stearic acid | 1 | 1 | 1 | 1 | 1 | 1 |
| | 2,5-dimercapto-1,3,4-thiadiazole | 0.5 | - | - | - | 0.5 | - |
| | dimethyldodecylamine | 1 | - | - | - | - | - |
| | salt of Synthesis Example 2 | - | 1.5 | - | - | - | - |
| | salt of Synthesis Example 3 | - | - | 2.5 | - | - | - |
| | Anon BL *4 | - | - | - | 1 | 1 | - |
| | Newrex powder T *5 | - | - | - | - | - | 1 |
| | Noclac 6C *6 | - | - | - | - | - | - |
| | imidazole | - | - | - | - | - | - |
| | 1,4-diazabicyclo [2,2,2] octane | - | - | - | - | - | - |
| | piperadine | - | - | - | - | - | - |
| | p-methoxyaniline | - | - | - | - | - | - |
| | dicyclohexylamine | - | - | - | - | - | - |
| | Diapon T powder *7 | - | - | - | - | - | - |
| | zinc white | 3 | 3 | 3 | 3 | 3 | 3 |
| | vulcanization accelerator DM *8 | 1 | 1 | 1 | 1 | 1 | 1 |
| | vulcanization accelerator DPG *9 | 0.5 | 0.5 | 0.5 | 0.5 | 0.5 | 0.5 |
| | sulfur | 1.5 | 1.5 | 1.5 | 1.5 | 1.5 | 1.5 |
| tan $\delta$ (50°C) | | 0.090 | 0.082 | 0.081 | 0.108 | 0.085 | 0.110 |

Table 2(d)

| | | Example | | | | | | | |
|---|---|---|---|---|---|---|---|---|---|
| | | 7 | 8 | 9 | 10 | 11 | 12 | 13 | 14 |
| Compounding recipe (part by weight) | SBR1500 *1 | - | - | - | - | - | - | - | - |
| | Tufdene 2000 *2 | - | - | - | - | - | - | - | - |
| | BR01 *3 | - | - | - | - | - | - | - | - |
| | polymer A of Synthesis Example 1 | 100 | 100 | 100 | 100 | 100 | 100 | 100 | 100 |
| | polymer B of Synthesis Example 1 | - | - | - | - | - | - | - | - |
| | polymer C of Synthesis Example 1 | - | - | - | - | - | - | - | - |
| | carbon black ISAF | 50 | 50 | 50 | 50 | 50 | 50 | 50 | 50 |
| | stearic acid | 1 | 1 | 1 | 1 | 1 | 1 | 1 | 1 |
| | 2,5-dimercapto-1,3,4-thiadiazole | 0.5 | 0.5 | 0.5 | 0.5 | 0.5 | 0.5 | 0.5 | 0.5 |
| | dimethyldodecylamine | - | - | - | - | - | - | - | - |
| | salt of Synthesis Example 2 | - | - | - | - | - | - | - | - |
| | salt of Synthesis Example 3 | - | - | - | - | - | - | - | - |
| | Anon BL *4 | - | - | - | - | - | - | - | - |
| | Newrex powder T *5 | 1 | - | - | - | - | - | - | - |
| | Noclac 6C *6 | - | 1 | - | - | - | - | - | - |
| | imidazole | - | - | 1 | - | - | - | - | - |
| | 1,4-diazabicyclo [2,2,2] octane | - | - | - | 1 | - | - | - | - |
| | piperadine | - | - | - | - | 1 | - | - | - |
| | p-methoxyaniline | - | - | - | - | - | 1 | - | - |
| | dicyclohexylamine | - | - | - | - | - | - | 1 | |
| | Diapon T powder *7 | - | - | - | - | - | - | - | 1 |
| | zinc white | 3 | 3 | 3 | 3 | 3 | 3 | 3 | 3 |
| | vulcanization accelerator DM *8 | 1 | 1 | 1 | 1 | 1 | 1 | 1 | 1 |
| | vulcanization accelerator DPG *9 | 0.5 | 0.5 | 0.5 | 0.5 | 0.5 | 0.5 | 0.5 | 0.5 |
| | sulfur | 1.5 | 1.5 | 1.5 | 1.5 | 1.5 | 1.5 | 1.5 | 1.5 |
| tan $\delta$ (50°C) | | 0.086 | 0.086 | 0.081 | 0.083 | 0.083 | 0.087 | 0.086 | 0.085 |

*1 emulsion-polymerized SBR made by Japan Synthetic Rubber Company Limited

*2 solution-polymerized SBR made by Asahi Chemical Industries, Ltd.

*3 high-cis polybutadiene made by Japan Synthetic Rubber Company Limited

*4 dimethyldodecylbetaine made by Nippon Oil and Fats Company Limited

*5 sodium dodecylbenzene sulfonate made by Nippon Oil and Fats Company Limited

*6 N-phenyl-N'-isopropyl-p-phenylene diamine made by Ouchi Shinko Kagaku K.K.

*7 sodium acylmethyltaurate made by Nippon Oil and Fats Company Limited

*8 dibenzothiazyldisulfide made by Ouchi Shinko Kagaku K.K.trade name: Noccelor DM-T

*9 diphenylguanidine made Sumitomo Chemical K.K. trade name: Soksinol DG

As shown in Table 2, when 2,5-dimercapto-1,3,4-thiadiazole is added to each of SBR 1500, Tafuden 2000 and BR01, an improving effect of low heat generation of not less than 20% is developed, while the effect in respect of the polymer of Synthesis Example 1 is only 12%. This is considered to be due to the fact that the rubber composition containing the polymer of Synthesis Example 1 is fairly low in tan δ even in the case of compounding no 2,5-dimercapto-1,3,4-thiadiazole so that it is difficult to further lower the heat generation.

However, when 2,5-dimercapto-1,3,4-thiadiazole is used together with dimethyldodecylamine, Anon BL, NewRex powder T, Noclac 6C, imidazole, 1,4-diazabicycl[2,2,2] octane, piperadine, p-methoxyaniline, dicyclohexylamine or Diapo T powder, it is found to obtain a considerably improved effect.

Furthermore, it has been confirmed that a similar effect of low heat generation is developed by separately adding these compounds, or by previously synthesizing a salt (Synthesis Examples 2, 3) and adding it in the compounding with the rubber composition.

On the other hand, the effect of improving heat generation is hardly obtained when adding the compounds of the general formulae (I)-(VIII) alone. Furthermore, it has been found that the synergistic effect obtained by 2,5-dimercapto-1,3,4-thiadiazole and dimethyldodecylamine or the like is developed only in the use of the tin-modified polymer (polymers A-C of Synthesis Example 1).

As seen from the Examples and Comparative Examples, the rubber compositions obtained by compounding a particular low heat-generation improving agent being a combination of 2,5-dimercapto-1,3,4-thiadiazole and a particular compound selected from the compounds of formulae (I)-(VIII) with a particular tin-modified polymer develop the effect of improving low heat-generation, which has not been attained in the conventional low heat-generation rubber composition, so that they may be widely utilized as a low heat-generation rubber, for example in the field of all rubber articles such as tires, conveyor belts, and hoses.

## Claims

1. A low heat-generation rubber composition comprising 20-100 parts by weight of a reinforcing filler, 0.1-5 parts by weight of 2,5-dimercapto-1,3,4-thiadiazole and 0.2-10 parts by weight of at least one compound selected from compounds of the following formulae (I) - (VIII):

(I) 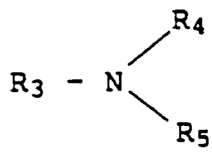

(II) 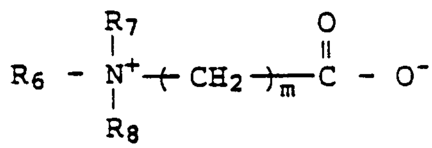

(III) 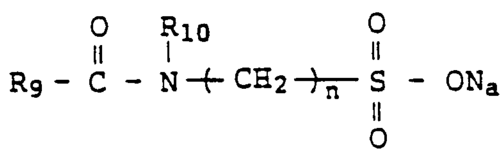

(IV) 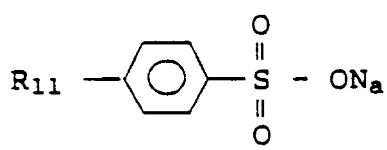

(V) 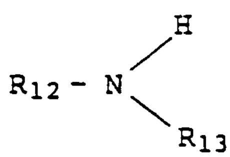

( VI ) 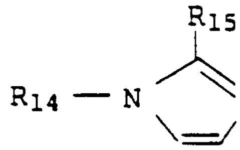

( VII ) 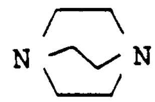

( VIII ) 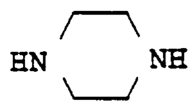

(wherein $R_3$, $R_6$, $R_9$, $R_{11}$ in (I)-(VIII) are alkyl group having a carbon number of 8-18 or aryl group, $R_4$, $R_5$, $R_7$, $R_8$, $R_{10}$ are alkyl group having a carbon number of 1-2, $R_{12}$ is aryl group or cyclohexyl group, $R_{13}$ is alkyl group having a carbon number of 1-6, cyclohexyl group or hydrogen atom, $R_{14}$, $R_{15}$ are alkyl groups having a carbon number of 1-18, benzyl group or hydrogen atom, and each of m and n is an integer of 1-3) based on 100 parts by weight of a polymer obtained by reacting a conjugated diene series polymer containing an alkali metal in its polymer terminal, which is obtained by polymerizing or copolymerizing a conjugated diene compound or a conjugated diene compound and an aromatic vinyl compound in a hydrocarbon solvent in the presence of an organic alkali metal as a polymerization initiator, with a tin compound represented by the following general formula:

$Sn(R_1)pX_{4-p}$

or

$$(R_1)_pSn(O\underset{\underset{O}{\|}}{C}-R_2)_{4-p}$$

(wherein $R_1$ and $R_2$ are substituents selected from the group consisting of alkyl group, alkenyl group, cycloalkyl group and aryl group and are the same or different, X is a halogen atom and p is an integer of 0-3) alone or a rubber blend of not less than 30 parts by weight of this polymer and another diene series polymer.

**2.** A rubber composition as claimed in claim 1, characterized in that 2,5-dimercapto-1,3,4-thiadiazole is compounded in an amount of 0.2-1.5 parts by weight.

**3.** A rubber composition as claimed in claim 1 or 2, characterized in that at least one compound among the compounds represented by the formulae (I)-(VIII) is compounded in an amount of 0.4-4 parts by weight.

**Patentansprüche**

**1.** Kautschukzusammensetzung mit niedriger Wärmeerzeugung, welche aufweist: 20-100 Gewichtsteile eines Verstärkerfüllstoffs, 0.1-5 Gewichtsteile 2,5-Dimercapto-1,3,4-thiadiazol und 0.2-10 Gewichtsteile mindestens einer Verbindung, die unter Verbindungen mit den folgenden Formeln (I) - (VIII) ausgewählt ist:

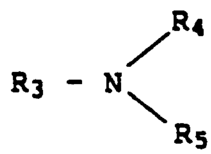

(I)

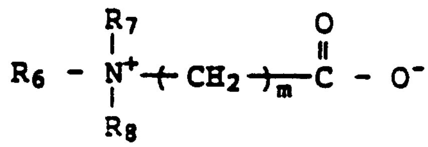

(II)

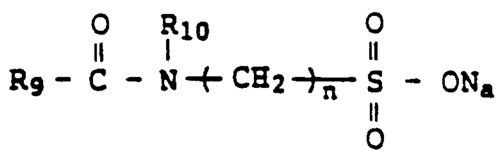

(III)

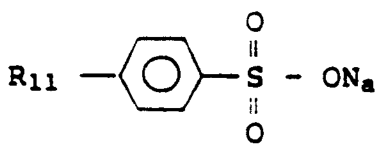

(IV)

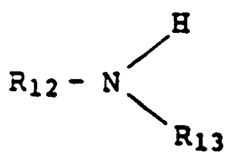

(V)

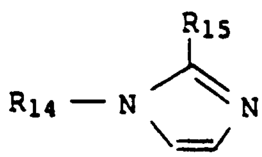

(VI)

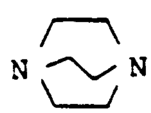

(VII)

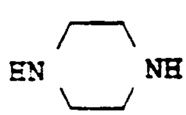

(VIII)

(wobei $R_3$, $R_6$, $R_9$, $R_{11}$ in (I)-(VIII) Alkylgruppen mit 8-18 Kohlenstoffatomen oder Arylgruppen. $R_4$, $R_5$, $R_7$, $R_8$, $R_{10}$ Alkylgruppen mit 1-2 Kohlenstoffatomen, $R_{12}$ eine Arylgruppe oder Cyclohexylgruppe, $R_{13}$ eine Alkylgruppe mit 1-6 Kohlenstoffatomen, eine Cyclohexylgruppe oder ein Wasserstoffatom, $R_{14}$, $R_{15}$ Alkylgruppen mit 1-18 Kohlenstoffatomen, Benzylgruppen oder Wasserstoffatome sind und m und n jeweils eine ganze Zahl von 1-3 bedeuten) bezogen auf 100 Gewichtsteile eines Polymers das man erhält, indem man ein Polymer der Reihe der konjugierten Diene, welches in seiner Polymerendgruppe ein Alkalimetall enthält und durch Polymerisation oder Copolymerisation einer konjugierten Dienverbindung oder einer konjugierten Dienverbindung mit einer aromatischen Vinylverbindung in einem Kohlenwasserstoff-Lösungsmittel in Gegenwart eines organisch gebundenen Alkalimetalls als Polymerisationsinitiator gewonnen wird, mit einer durch die folgende allgemeine Formel dargestellten Zinnverbindung zur Reaktion bringt:

$Sn(R_1)_pX_{4-p}$

oder

$$(R_1)_pSn(OC\text{-}R_2)_{4-p}$$
$$\qquad\quad \| $$
$$\qquad\quad O$$

(wobei $R_1$ und $R_2$ gleiche oder verschiedene Substituenten sind, die aus der Gruppe ausgewählt werden, welche aus Alkylgruppen, Alkenylgruppen, Cycloalkylgruppen und Arylgruppen besteht, während X ein Halogenatom und p eine ganze Zahl von 0 bis 3 ist) allein oder bezogen auf eine Kautschukmischung aus nicht weniger als 30 Gewichtsteilen dieses Polymers und einem anderen Polymer der Dienreihe.

2. Kautschukzusammensetzung nach Anspruch 1, dadurch gekennzeichnet, daß 2,5-Dimercapto-1,3,4-thiadiazol in einem Anteil von 0.5-1.5 Gewichtsteilen beigemischt wird.

3. Kautschukzusammensetzung nach Anspruch 1 oder 2, dadurch gekennzeichne, daß unter den durch die Formeln (I) -(VIII) dargestellten Verbindungen mindestens eine Verbindung in einem Anteil von 0.4-4 Gewichtsteilen beigemischt wird.

## Revendications

1. Composition de caoutchouc à développement de chaleur réduit comprenant de 20 à 100 parties en poids d'une matière de charge de renforcement, de 0,1 à 5 parties en poids de 2,5-dimercapto-1,3,4-thiadiazole et de 0,2 à 10 parties en poids d'au moins un composé choisi parmi les composés des formules (I) à (VIII) suivantes:

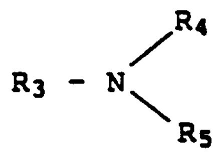

(I)

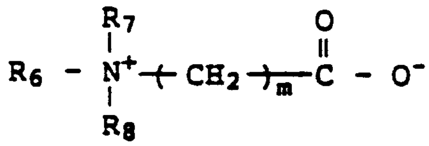

(II)

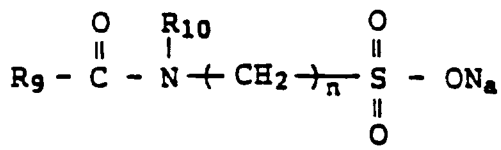

(III)

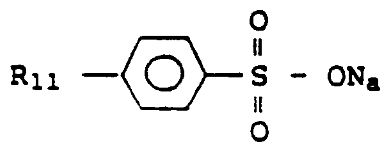

(IV)

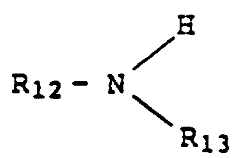

(V)

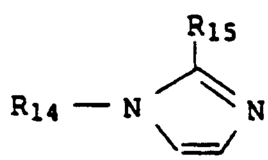

(VI)

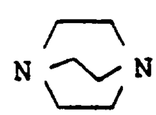

(VII)

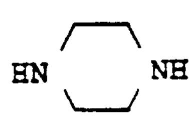

(VIII)

(dans lesquelles $R_3$, $R_6$, $R_9$ et $R_{11}$ dans (I) à (VIII) sont un groupe alkyle ayant de 8 à 18 atomes de carbone ou un groupe aryle, $R_4$, $R_5$, $R_7$, $R_8$ et $R_{10}$ sont un groupe alkyle ayant 1 ou 2 atomes de carbone, $R_{12}$ est un groupe aryle ou un groupe cyclohexyle, $R_{13}$ est un groupe alkyle ayant de 1 à 6 atomes de carbone, un groupe cyclohexyle ou un atome d'hydrogène, $R_{14}$ et $R_{15}$ sont un groupe alkyle ayant de 1 à 18 atomes de carbone, un groupe benzyle ou un atome d'hydrogène et chacun des m et n est un nombre entier de 1 à 3 inclusivement) sur la base de 100 parties en poids d'un polymère obtenu en faisant réagir un polymère de la série des diènes conjugués contenant un métal alcalin en position terminale du polymère, lequel est obtenu en polymérisant ou en copolymérisant un composé diénique conjugué ou un composé diénique conjugué et un composé vinylique aromatique dans un solvant hydrocarboné en présence d'un métal alcalin organique comme initiateur de la polymérisation.

avec un composé de l'étain représenté par la formule générale suivante:

$Sn(R_1)_pX_{4-p}$

ou

$$(R_1)_pSn(OC(=O)-R_2)_{4-p}$$

(dans laquelle $R_1$ et $R_2$ sont des substituants choisis dans le groupe constitué par les groupes alkyles, les groupes alcényles, les groupes cycloalkyles et les groupes aryles et sont identiques ou différents, X est une atome d'halogène et p est un nombre entier compris entre 0 et 3) seul ou un mélange de caoutchoucs ne contenant pas moins de 30 parties en poids de ce polymère et d'un autre polymère de la série diénique.

**2.** Composition de caoutchouc selon la revendication 1, caractérisée en ce que le 2,5-dimercapto-1,3,4-thiadiazole est compoundé en une quantité comprise entre 0,2 et 1,5 parties en poids.

**3.** Composition de caoutchouc selon la revendication 1 ou 2, caractérisée en ce qu'au moins un composé parmi les composés représentés par les formules (I) à (VIII) est compoundé en une quantité de 0,4 à 4 parties en poids.